# EUROPÄISCHE PATENTSCHRIFT

(11) **EP 0 488 065 B1**
(45) Veröffentlichungstag und Bekanntmachung des Hinweises auf die Patenterteilung: **19.04.1995**
(21) Anmeldenummer: 91119908.1
(22) Anmeldetag: 22.11.1991
(51) Int. Cl.: F23L 15/04, F28D 21/00

(54) **Röhrenwärmeaustauscher**
Tube-like heat-exchanger
Exchangeur de chaleur tubulaire

(30) Priorität: 29.11.1990 DE 4037987
(43) Veröffentlichungstag der Anmeldung: 03.06.1992
(73) Patentinhaber: Vetter, Richard, D-31226 Peine (DE)
(72) Erfinder: Vetter, Richard, D-31226 Peine (DE)
(74) Vertreter: Depmeyer, Lothar

(56) Entgegenhaltungen:
- CH-A- 422 848
- DE-A- 3 638 361
- DE-U- 8 530 072
- FR-A- 991 316
- US-A- 4 103 735

## Beschreibung

Die Erfindung betrifft einen Röhrenwärmeaustauscher zum Abkühlen von Verbrennungsgas und zum Erwärmen von Luft, insb. Verbrennungsluft, wobei die Rohre des Wärmeaustauschers wechselseitig durch gerade Rohrabschnitte und diese verbindende Krümmer von einer Seite zur gegenüberliegenden Seite des Wärmeaustauschers geführt sind, wobei die Rohre zum Leiten der Verbrennungsgase dienen und die Luft im Gegenstrom zu den Verbrennungsgasen in Richtung der Rohre in zur Aufnahme der Rohre dienenden, hin und her geführten Kanälen geleitet ist.

Aus der DE-A-36 38 361 ist ein ähnlicher Röhrenwärmeaustauscher bekannt, bei dem die Verbrennungsgase jedoch in nur einem einzelnen Rohr geführt sind, womit ein hoher Wirkungsgrad nicht erreicht werden kann, da die Kontaktfläche zwischen warmen und kaltem Medium gering ist.

Einen weiteren Wärmetauscher zur Nutzung von in den Verbrennungsgasen enthaltener Energie zeigt die US-A-4 103 735. Die Verbrennungsgase werden hier durch mehrere parallele, gerade und einzeln angeordnete Rohre geleitet. Die Rohre sind in einem kastenförmigen Gehäuse angeordnet, in das Luft, die angewärmt zur Raumheizung dienen soll, eingeleitet und parallel und im Gegenstrom zu den Verbrennungsgas geführt wird. Ein derartiger Wärmetauscher ermöglicht nur dann einen einfachen und kompakten Aufbau, wenn die Rohre eine gewisse Länge nicht überschreiten. In diesem Falle bleibt jedoch der Wirkungsgrad gering.

Der Erfindung liegt die Aufabe zugrunde, mit geringem technischem Aufwand einen Röhrenwärmeaustauscher zu schaffen, der aus einfachen Bauteilen zusammengesetzt ist, aber dennoch einen hohen Wirkungsgrad hat.

Diese Aufgabe wird erfindungsgemäß dadurch gelöst, daß die Rohre in einer Lage verlegt sind und die Rohrenden gemeinsam in einen Sammelkasten münden, daß die Kanäle einen flach rechteckigen Querschnitt haben und sich die Lage auf etwa halber Höhe dieses Querschnitts in der Weise befindet, daß oberhalb und unterhalb der Lage freie Durchgangsräume für die Luft verbleiben, daß die Rohre in der Lage dicht bei dicht angeordnet sind, und daß die Rohre Kunststoffrohre und die geraden Abschnitte und die zugehörigen Krümmer für die Rohre durch eine Muffensteckverbindung zusammengehalten sind.

Demgemäß können die die Abgase führenden Rohre aus einzelnen Elementen zusammengesetzt werde; da sie dicht bei dicht angeordnet sind, wird mit Vorteil oberhalb und unterhalb jeder Rohrlage ein Luftkanal geschaffen. Dadurch ergibt sich auch eine gegenseitige Abstützung, sodaß zusätzliche Befestigungsmittel weitgehend eingespart werden können.

Bei dem erfindungsgemäßen Wärmetauscher ist es zudem ausreichend, wenn nur die Rohre zum Leiten der Verbrennungsgase aus widerstandsfähigem Werkstoff gefertigt sind, wobei es bei Verbrennungsgas unter etwa 60°C genügt, Kunststoffrohre zu verwenden. Alle anderen Teile des Austauschers können aus einfachen Werkstoffen hergestellt werden, da sie nur mit der zu erwärmenden Luft, insb. Verbrennungsluft in Berührung kommen.

Besonders geeignet ist der erfindungsgemäße Wärmetauscher, wenn er einem Kessel nachgeschaltet wird, um seine Verbrennungsgase auf etwa 40°C abzukühlen bzw. gleichzeitig die dem Kesselbrenner zuzuführende Luft mit Vorteil vorzuwärmen.

In der Zeichnung ist ein Ausführungsbeispiel der Erfindung dargestellt, das zur Erläuterung weiterer Einzelheiten der Erfindung dient.

Es zeigen :
- Fig. 1: eine Kesselanlage mit nachgeschaltetem Röhrenwärmeaustauscher,
- Fig. 2: einen senkrechten Schnitt durch den für die Anlage gemäss Fig. 1 benötigten Wärmetauscher und
- Fig. 3: einen Schnitt nach der Linie III - III von Fig. 2.

Der Kessel 1 weist in seinem oberen Teil einen Brenner 2 für flüssige oder gasförmige Brennstoffe auf. Das zu erwärmende Wasser wird bei 3 zugeführt und bei 4 abgezogen. Die Verbrennungsgase verlassen unten am Kessel bei 5 den Kessel und werden einem Röhrenwärmeaustaucher 6 zugeleitet, dessen oben gelegener Eingang mit 7 bezeichnet ist. Die Tempereatur der Verbrennungsgase am Eingang 7 beträgt etwa 6o° C, während sie unten am Ausgang 8 des Tauschers etwa 4o° C beträgt. Die Abkühlung der Verbrennungsgase in der Weise, dass eine Kondensation eintritt, wird durch Frischluft bewirkt, die dem Tauscher bei 9 zuströmt. Am oberen Ende bei 1o ist der Austritt für die nunmehr angewärmte Luft. Diese wird dem Brenner 2 zugeleitet, um so den Verbrennungsvorgang zu verbessern.

Der Röhrenwärmeaustauscher 6 hat ein etwa quaderförmiges Gehäuse 11 mit waagerechten Querwandungen 12, die wechselseitig von der linken Wand 13 und der rechten Wand 14 ausgehen. Jeweils an der gegenüberliegenden Wand verbleibt eine Aussparung 15. Somit ergibt sich für die zu erwärmende Luft vom Eintritt bei 9 aus gesehen ein hin und her geführter Kanal 16 mit einem rechteckigen Querschnitt - unterstellt, dass die Querwandungen 12 von der Stirnwand zur Hinterwand des Röhrenwärmeaustauschers 6 spaltfrei übergehen.

Innerhalb dieses scharf s-förmigen Kanals 16 sind in einer Lage 17 dicht bei dicht angeordnete Rohre 18 aus einem gegen Schadstoffe und dgl. widerstandsfähigem Kunststoff verlegt, und zwar so, dass sich oberhalb und unterhalb der Lagen 17 je ausreichend grosse Freiräume 19 zum Luftdurchtritt ergeben.

Die Rohrführung für die Verbrennungsgase innerhalb des Röhrenwärmeaustauschers 6 wird von waagerechten, gerade verlaufenden Abschnitten 2o gebildet, die durch zwei 90º oder einen 18o°-Krümmer 21 verbunden sind.

Diese Rohrelemente 2o,21 werden zweckmässigerweise durch Steckverbindungen nach Art einer Muffenverbindung mit O-Ring-Dichtung zusammengehalten; demgemäss können die Rohrelemente einfach zusammengesetzt und auch wieder getrennt werden, wenn Reparaturen oder Montagen notwendig werden.

Sowohl am Eintrittt 7 als auch am Austritt 8 der Verbrennungsgase gehen die Rohrabschnitte 2o gasdicht in Sammelkästen 22 über, die je einen gemeinsamen Einlass 23 und einen gemeinsamen Auslass 24 für die Rauchgase aufweisen.

Der am Austritt 8 gelegene Sammelkasten 22 nimmt auch das Kondensat auf; es entweicht über einen Geruchverschluss 25 und ein nicht näher dargestelltes Neutralisationsmittel. Demgemäss verlässt das Kondensat bei 26 den Sammelkasten 22; es kann unbedenklich der Kanalisation zugeleitet werden, weil die Schadstoffe vorher durch ein geeignetes Granulat neutralisiert wurden.

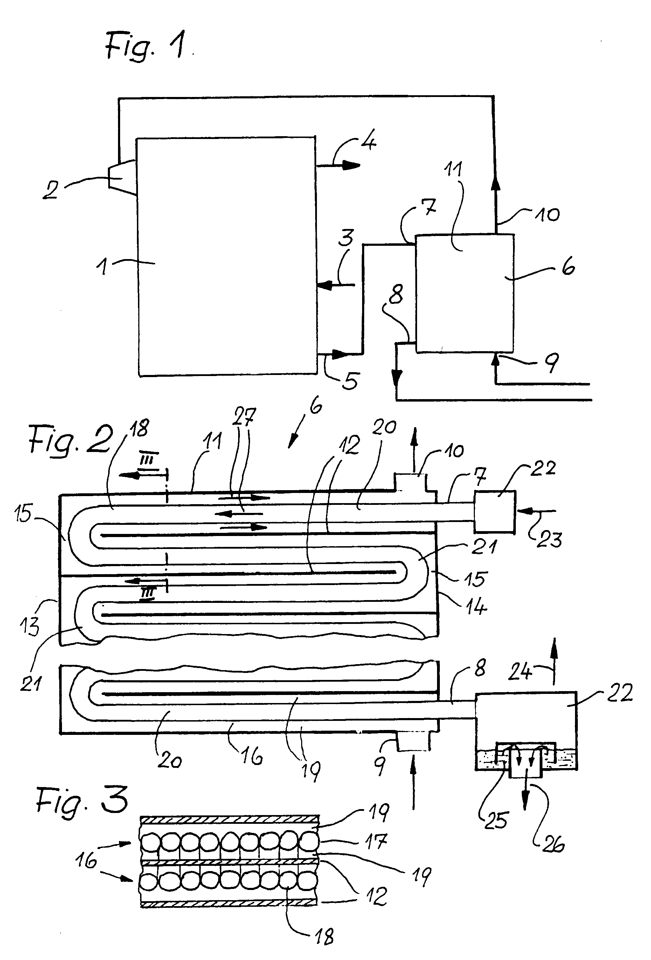

Wie die Pfeile bei 27 zeigen, werden die Verbrennungsgase einerseits und die Luft im Gegenstrom geführt; die Luft strömt jeweils unterhalb und oberhalb der Lage 17, wobei auch bei geringem gegenseitigen Abstand der Rohre die Luft ggfs. vom oberen in den unteren Teil ( oder umgekehrt ) des Kanals 16 gelangen kann. Wie aus Fig. 2 erkennbar ist, sind somit die Verbrennungsgase und die Luft gemeinsam in dem erwähnten, hin und her geführten Kanal 16 geführt.

Wenngleich auch die bevorzugte Anwendung des erfindungsgemässen Tauschers in Verbindung mit der Vorwärmung von Verbrennungsluft gegeben ist, kann dennoch eine Lufterwärmung auch oder zusätzlich zu anderen Zwecken erfolgen. So ist es möglich, die erwärmte Luft zu Heizzwecken insb. zum Beheizen von Räumen zu verwenden.

## Patentansprüche

1. Röhrenwärmeaustauscher zum Abkühlen von Verbrennungsgas und zum Erwärmen von Luft, insb. Verbrennungsluft, wobei die Rohre (18) des Wärmeaustauschers wechselseitig durch gerade Rohrabschnitte und diese verbindende Krümmer von einer Seite zur gegenüberliegenden Seite des Wärmeaustauschers geführt sind und zum Leiten der Verbrennungsgase dienen, die Luft im Gegenstrom zu den Verbrennungsgasen in Richtung der Rohre (18) in zur Aufnahme der Rohre (18) dienenden, hin und her geführten Kanälen (16) mit flach rechteckigen Querschnitten geleitet ist, wobei die Rohre (18) dicht bei dicht in einer Lage (17) verlegt sind und die Rohrenden gemeinsam in einen Sammelkasten (22) münden und die Lage (17) sich auf etwa halber Höhe des Querschnitts der Kanäle (16) in der Weise befindet, daß oberhalb und unterhalb der Lage freie Durchgangsräume für die Luft verbleiben (Pfeile 27), und die Rohre (18) Kunststoffrohre und die geraden Abschnitte (20) und die zugehörigen Krümmer (21) für die Rohre durch eine Muffensteckverbindung zusammengehalten sind.

2. Röhrenwärmeaustauscher nach Anspruch 1, dadurch gekennzeichnet, daß der am Ausgang (8) der Verbrennungsgase befindliche Sammelkasten (22) einen Geruchsverschluß (25) vor dem Kondensataustritt (26) hat und zudem zur Neutralisation des Kondensats dienende Mittel aufweist.

## Claims

1. Heat exchanger having tubes for cooling combustion gas and for heating air, esp. combustion air, the tubes (18) of the heat exchanger extending alternately as rectilinear tube portions and curved portions, which connect the latter, from one side to the opposite side of the heat exchanger and serving to conduct the combustion gases, the air being conducted in countercurrent with the combustion gases in the direction of the tubes (18) in reciprocating conduits (16), which serve to accommodate the tubes (18) and have flat-rectangular cross-sections, the tubes (18) being laid in a layer (17) close up to one another, and the tube ends discharging jointly into a collecting tank (22), and the layer (17) being situated roughly halfway up the cross-section of the conduits (16) in such a manner that free transit areas for the air remain above and below the layer (arrows 27), and the tubes (18), plastics material tubes and the rectilinear portions (20) and the associated curved portions (21) for the tubes being held together by a plug-in sleeve connection.

2. Heat exchanger having tubes according to claim 1, characterised in that the collecting tank (22), which is situated at the outlet (8) for the combustion gases, has an odour sealing means (25) upstream of the condensate outlet (26) and also has means which serve to neutralise the condensate.

## Revendications

1. Echangeur de chaleur tubulaire destiné à refroidir des gaz de combustion et à réchauffer de l'air, notamment de l'air de combustion, les tubes (18) de l'échangeur de chaleur passant alternativement d'une face de l'échangeur de chaleur à la face opposée par des tronçons de tubes droits et des coudes reliant ceux-ci et les tubes servant à conduire les gaz de combustion et l'air étant conduit à contre-courant des gaz de combustion dans la direction des tubes (18) dans des canaux (16) de sections transversales rectangulaires planes servant à la réception des tubes (18) et allant dans un sens et dans l'autre, les tubes (18) étant posés tout près les uns des autres en une couche (17) et les extrémités des tubes débouchant ensemble dans une boîte (22) collectrice et la couche (17) se trouvant environ à mi-hauteur de la section transversale des canaux (16) de façon qu'il reste des espaces libres de passage (flèches 27) de l'air au-dessus et en dessous de la couche, et les tubes (18) étant des tubes en matière plastique et les tronçons (20) droits et les coudes (21) qui leur sont associés étant maintenus ensemble par un emboîtage à manchon.

2. Echangeur de chaleur tubulaire suivant la revendication 1 caractérisé en ce que la boîte (22) collectrice se trouvant à la sortie des gaz de combustion a un siphon (26) en amont de la sortie (26) du condensat et comporte de plus des agents de neutralisation du condensat.
